# EUROPÄISCHE PATENTSCHRIFT

(11) **EP 2 217 480 B1**
(45) Veröffentlichungstag und Bekanntmachung des Hinweises auf die Patenterteilung: **24.04.2013**
(21) Anmeldenummer: 08859738.0
(22) Anmeldetag: 02.12.2008
(51) Int. Cl.: B60W 20/00, B60W 30/186

(54) **VERFAHREN UND VORRICHTUNG ZUR STEUERUNG EINES KRIECHBETRIEBES EINES FAHRZEUGES MIT EINEM HYBRIDANTRIEB**
METHOD AND DEVICE FOR CONTROLLING A CREEP MODE OF A VEHICLE COMPRISING A HYBRID DRIVE
DISPOSITIF ET PROCÉDÉ SERVANT À COMMANDER LE FONCTIONNEMENT EN VITESSE EXTRALENTE D'UN VÉHICULE POSSÉDANT UN ENTRAÎNEMENT HYBRIDE

(30) Priorität: 13.12.2007 DE 102007055785
(43) Veröffentlichungstag der Anmeldung: 18.08.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, A-5163 Mattsee (AT)
(86) Internationale Anmeldenummer: PCT/EP2008/066586
(87) Internationale Veröffentlichungsnummer: WO 2009/074484

(56) Entgegenhaltungen:
- EP-A- 1 862 364
- DE-A1- 10 158 536

## Beschreibung

Die Erfindung betrifft ein Verfahren und eine Vorrichtung zur Steuerung eines Kriechbetriebes eines Fahrzeuges mit einem Hybridantrieb gemäß dem Oberbegriff des Patentanspruchs 1 bzw. des Patentanspruchs 6, wie bekannt aus EP-A-1 862 364.

Hybridabtriebe gewinnen im Fahrzeugbau aufgrund ihres Potenzials zur Verringerung von Schadstoffemissionen und Energieverbrauch zunehmend an Bedeutung. Derartige Fahrzeuge weisen verschiedenartige Antriebsquellen auf, wobei insbesondere Kombinationen von Verbrennungs- und Elektromotoren von Vorteil sind, da sie einerseits die Reichweiten- und Leistungsvorteile von Brennkraftmaschinen und andererseits die flexiblen Einsatzmöglichkeiten der elektrischen Maschinen als alleinige oder Hilfsantriebsquelle oder als Startergenerator sowie Generator zur Stromerzeugung und Rekuperation nutzen können.

Vom Markt werden Hybrid-Antriebsstränge gefordert, die möglichst ohne zusätzlichen Bauraumbedarf, bei möglichst geringer Kompliziertheit und bei geringem Kosten- und Konstruktionsaufwand in Fahrzeuge implementiert werden können. Es werden grundsätzlich zwei Hybrid-Topologien, der Serienhybrid und der Parallelhybrid unterschieden. Solche Anordnungen sind bereits bekannt und werden ständig weiterentwickelt.

Beim Serienhybrid sind die Antriebsmaschinen antriebstechnisch hintereinander geschaltet. Dabei dient der Verbrennungsmotor, beispielsweise ein Dieselmotor, als Antrieb für einen Generator, der eine elektrische Maschine speist. Das Fahrzeug wird ausschließlich über den Elektromotor angetrieben. Der Verbrennungsmotor ist von den Antriebsrädern entkoppelt und kann daher ständig in einem einzigen Betriebspunkt, also bei einem bestimmten Drehmoment und konstanter Drehzahl betrieben werden. Dieses Antriebskonzept eignet sich beispielsweise für Busse im städtischen Kurzstreckenverkehr, wobei vorzugsweise ein Betriebspunkt, bei dem der Wirkungsgrad des Verbrennungsmotors möglichst hoch ist und gleichzeitig Schadstoffemissionen, Kraftstoffverbrauch und Geräuschentwicklung in einem günstigen Bereich liegen, eingestellt wird. Ungünstig wirkt sich beim Serienhybrid dagegen aus, dass der Wirkungsgrad des Antriebs aufgrund der mechanisch-elektrischen Mehrfachumwandlung eingeschränkt ist.

Demgegenüber bieten Parallelhybrid-Antriebstränge durch eine bezüglich des Kraftflusses parallele Anordnung der Triebstrangaggregate neben der Überlagerung der Antriebsmomente die Möglichkeit der Ansteuerung mit rein verbrennungsmotorischem Antrieb oder rein elektromotorischem Antrieb. Grundsätzlich kann beim Parallelhybrid der Verbrennungsmotor durch jeweiliges Belasten bzw. Unterstützen mittels einer oder mehrerer elektrischer Maschinen weitgehend bei optimalem Drehmoment betrieben werden, so dass der maximale Wirkungsgrad des Verbrennungsmotors effektiv genutzt werden kann. Durch die Unterstützung des Verbrennungsmotors verringert sich im Mittel auch der Kraftstoffverbrauch. Da bei kurzzeitigen erhöhten Leistungsanforderungen im sogenannten Boostbetrieb, beispielsweise bei Überholvorgängen, eine Summierung der Antriebsleistung möglich ist, kann der Verbrennungsmotor nahezu ohne Einbußen an Leistung und Fahrkomfort des Fahrzeuges vergleichsweise kleiner sowie gewichts- und bauraumsparender ausgelegt werden, was sich zusätzlich emissionsverringernd und kostengünstig auswirkt. Die elektrische Maschine kann zudem als integrierter Startergenerator zum Start des Verbrennungsmotors über eine Kupplung fungieren. Weiterhin dient die elektrische Maschine im generatorischen Betrieb zum Laden eines elektrischen Energiespeichers und kann zur Rekuperation eingesetzt werden. Als Getriebe zur Variation der Übersetzung des Antriebs der angetriebenen Achsen kommen grundsätzlich alle Formen von Fahrzeuggetrieben in Betracht.

Parallelhybridantriebe sind in der Regel als Ein-Kupplungsanordnung (1 K) oder Zwei-Kupplungsanordnung (2K) ausgebildet. Bei beiden Anordnungen kann eine elektrische Maschine mit integrierter Startergenerator - Funktion (1 K-ISG bzw. 2K-ISG - Anordnungen) integriert sein.

In der ersten Bauweise ist, wie beispielsweise in der US 2005 022 1947 A1 dargestellt, der Verbrennungsmotor über eine erste Kupplung mit einer Elektromaschine verbindbar. Die Elektromaschine ist über eine separate zweite Kupplung mit einem Schaltgetriebe koppelbar.

Die zweite Bauweise zeigt beispielsweise die DE 10 2005 051 382 A1. Bei dieser vergleichsweise einfachen und besonders kompakt bauenden Anordnung ist lediglich eine Kupplung zwischen dem Verbrennungsmotor und der Elektromaschine vorgesehen. Eine zweite separate Kupplung entfällt. Die Kupplung kann als eine reibschlüssige oder im einfachsten Fall als eine besonders kostengünstige und bauraumsparende formschlüssige Trennkupplung ausgebildet sein.

Grundsätzlich kann bei einer derartigen Anordnung die Funktion einer optionalen zweiten Kupplung zwischen Elektromaschine und Abtrieb, wenn dies bei dem jeweiligen Antriebskonzept vorgesehen bzw. erforderlich ist, von, beispielsweise bei Automatgetrieben ohnehin vorhandenen, getriebeinternen Schaltkupplungen und/oder Schaltbremsen oder einer vorgeschalteten Wandlerüberbrückungskupplung übernommen werden.

Weiterhin ist es bekannt, im Antriebsstrang von Kraftfahrzeugen elektrische Maschinen als Alternative zu herkömmlichen Reibkupplungen oder zu hydrodynamischen Wandlern als Anfahrelemente einzusetzen, um mechanische Verluste bei der Kraftübertragung im Antriebsstrang möglichst gering zu halten.

Zudem ist es bekannt, insbesondere bei Kraftfahrzeugen mit automatisierten Schaltgetrieben oder Automatgetrieben, zur Erhöhung des Fahrkomforts und der Betriebssicherheit einen Kriechmodus zu implementieren. Grundsätzlich rollt dabei das Fahrzeug bei einer eingelegten Getriebeübersetzung, nicht betätigter Bremse und nicht betätigtem Fahrpedal leicht an bzw. bewegt sich in diesem Fahrzustand mit sehr geringer Geschwindigkeit, welches vom Fahrer als angenehm empfunden wird. An Steigungen ist mittels eines derartigen Kriechmodus die Realisierung einer zeitlich begrenzten Haltefunktion möglich, bei der ein ungewolltes Rollen des Fahrzeugs vermieden wird. Im Kriechmodus können auch kleine Hindernisse wie Bordsteinkanten überwunden werden.

Im Kriechbetrieb wird vom Antrieb an den Abtrieb bzw. die angetriebenen Fahrzeugräder ein Kriechmoment übertragen, welches vorzugsweise auf einen vorgegebenen Kennwert bzw. eine Kennlinie einstellbar ist. Ein regelbarer Kriechmodus ist bei verschiedenen verbreiteten Antriebskonzepten möglich.

Bei Fahrzeugen mit einem automatisierten Schaltgetriebe und einer automatischen reibschlüssigen Anfahrkupplung kann die Regelung des Kriechmodus durch eine entsprechende Ansteuerung der Anfahrkupplung erfolgen. Bei Fahrzeugen mit Automatgetrieben und einem hydrodynamischen Wandler ist das übertragene Kriechmoment im Wesentlichen durch die Leerlaufdrehzahl des Verbrennungsmotors bestimmt bzw. über diese regelbar.

Bei Hybrid- oder Elektrofahrzeugen kann eine elektrische Maschine zur Erzeugung eines Kriechmodus eingesetzt werden. Aus der DE 10 2006 003 714 A1 ist beispielsweise ein elektrodynamisches Antriebssystems eines Kraftfahrzeuges bekannt, bei dem mittels einer Ansteuerung einer elektrischen Maschine als zusätzlichem Antriebsaggregat ein regelbarer Kriech-Fahrzustand, vergleichbar zum Kriechbetrieb eines Fahrzeuges mit einem automatischen Stufengetriebe und einem hydrodynamischen Wandler, nachempfunden wird, wodurch ein hoher Fahrkomfort gewährleistet wird.

Ein Kriechbetrieb mittels eines elektrodynamischen Anfahrelementes hat gegenüber Antriebssträngen mit einer Reibkupplung, die zur Übertragung eines Kriechmomentes im Schlupf betrieben wird, grundsätzlich den Vorteil, dass die Gefahr einer Kupplungsüberhitzung mit erhöhtem Kupplungsverschleiß bei längerer Kriechdauer entfällt.

Um einen Kriechbetrieb, vergleichbar einem Fahrzeug mit einem hydrodynamischen Drehmomentwandler als Anfahrelement, bei der bereits erwähnten 1 K-ISG - Anordnung in einem Parallelhybrid - Antriebsstrang, mit einer Reibkupplung zur Anbindung des Verbrennungsmotors, darzustellen, scheint daher ein rein elektromotorisches Kriechen mittels der elektrischen Maschine bei offener Kupplung und im Leerlauf laufendem Verbrennungsmotor naheliegend, um erst dann, wenn der elektrische Antriebsenergiespeicher, der die elektrische Maschine speist, nahezu leer ist oder eine Überhitzung der elektrischen Maschine droht, das angeforderte Kriechmoment über die Reibkupplung im Schlupfbetrieb zu übertragen.

Dabei ergibt sich jedoch das Problem, dass spätestens dann, wenn der Energiespeicher leer ist, die Reibkupplung das gesamte Kriechmoment und zusätzlich ein generatorisches Moment der elektrischen Maschine zum Laden des Energiespeichers und gegebenenfalls zur Versorgung eines Bordnetzes mit Nebenaggregaten übertragen muss, um den Kriechbetrieb fortzusetzen. Dabei entsteht aufgrund des relativ hohen zu übertragenden Gesamtmomentes an der Kupplung eine große Verlustleistung. Dies kann dazu führen, dass letztlich ein Kriechbetrieb oder ein Anfahrvorgang unterbrochen werden muss, um die Reibkupplung vor einer Beschädigung zu schützen, oder dass die Kupplung größer dimensioniert und aufwendiger gekühlt werden muss, um einen unterbrechungsfreien Kriech- und Anfahrbetrieb des Fahrzeuges zu gewährleisten, wodurch ein höherer Konstruktions- und Kostenaufwand sowie zusätzlicher Bauraumbedarf und ein Gewichtsnachteil entsteht. Somit ist ein rein elektromotorisches Kriechen, zumindest wenn die Möglichkeit einer vergleichsweise langen Kriechzeit bestehen soll, bei einem derartigen 1 K-ISG - Parallelhybrid-Antrieb eher weniger vorteilhaft.

Vor diesem Hintergrund liegt der Erfindung die Aufgabe zugrunde, ein Verfahren und eine Vorrichtung zur Steuerung eines Hybridantriebes zu schaffen, die einen effizienten, zeitlich weitgehend unbegrenzten und dennoch zuverlässigen Kriechbetrieb ermöglichen, bei dem außerdem ein elektrischer Energiespeicher möglichst wenig beansprucht wird.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass es bei einem Hybridfahrzeug mit einem Verbrennungsmotor, der über eine Reibkupplung an einen Parallelhybrid-Antriebsstrang anbindbar ist, und einer elektrischen Maschine, die zwischen dem Verbrennungsmotor und einem Abtrieb angeordnet ist, zur Sicherstellung einer elektrischen Energiereserve eines Antriebsenergiespeichers und zur Vermeidung eines Ladebetriebes der elektrischen Maschine mit einem hohem Generatormoment bei einem schlechten Wirkungsgrad günstig ist, einen Kriechbetrieb vorrangig über die Reibkupplung zu realisieren, und diesen Kriechbetrieb nur wenn notwendig mittels der elektrischen Maschine zu unterstützen.

Demnach geht die Erfindung aus von einem Verfahren zur Steuerung eines Kriechbetriebes eines Fahrzeugs mit einem Hybridantrieb, mit einem Antriebsstrang im Wesentlichen umfassend einen Verbrennungsmotor, eine elektrische Maschine, ein zwischen dem Verbrennungsmotor und der elektrischen Maschine angeordnetes Schaltelement, ein Getriebe und einen Abtrieb.

Unter einem Kriechbetrieb eines Fahrzeuges mit einem Verbrennungsmotor und einem Übersetzungsgetriebe wird verstanden, dass sich das Fahrzeug bei einer eingelegten Übersetzung und nicht betätigtem Fahrpedal auf unbestimmte Zeit mit einer so geringen Fahrgeschwindigkeit fortbewegt, dass eine kraftschlüssige Verbindung zwischen dem Verbrennungsmotor und einem Abtrieb mit einer Drehzahl des Verbrennungsmotors einhergehen müsste, die unterhalb einer Leerlaufdrehzahl läge. Der Kriechbetrieb soll auch ein Festhalten des Fahrzeuges gegen ein Anrollen entgegen einer angewählten Fahrtrichtung an einer Steigung einschließen.

Zur Lösung der gestellten Aufgabe sieht die Erfindung vor, dass bei laufendem Verbrennungsmotor zur Realisierung des Kriechbetriebes primär das Schaltelement und sekundär, in Abhängigkeit einer Überwachung vorgegebener Betriebsparameter des Schaltelementes und/oder von für den Kriechbetrieb relevanten Größen, die elektrische Maschine eingesetzt wird.

Die gestellte Aufgabe wird auch durch eine Vorrichtung zur Durchführung des Verfahrens gelöst.

Demnach geht die Erfindung weiterhin aus von einer Vorrichtung zur Steuerung eines Kriechbetriebes eines Fahrzeuges mit einem Hybridantrieb, mit einem Antriebsstrang im Wesentlichen umfassend einen Verbrennungsmotor, eine elektrische Maschine, ein zwischen dem Verbrennungsmotor und der elektrischen Maschine angeordnetes Schaltelement, ein Getriebe und einen Abtrieb. Zudem sind Steuerungs- und Überwachungsmittel vorgesehen, über die bei Berücksichtigung einer zulässigen Belastung des Schaltelementes ein Kriechmoment primär durch Betreiben des Schaltelementes in einem Schlupfbetrieb und sekundär durch Betreiben der elektrischen Maschine in einem Kriechmodus erzeugbar ist.

Das Schaltelement ist vorteilhaft als eine Reibkupplung ausgebildet, deren Temperatur zumindest im Kriechbetrieb mittels der Steuerungs- und Überwachungsmittel, beispielsweise mittels eines Temperatursensors, überwachbar und deren Übertragungsmoment, etwa mittels einem Drehmomentsensor, überwachbar und regelbar ist.

Durch die Erfindung wird vorteilhaft erreicht, dass ein Kriechbetrieb eines Parallelhybridfahrzeuges länger oder dauerhaft aufrechterhalten werden kann, wobei ein elektrischer Antriebsenergiespeicher weniger als bei bekannten technischen Lösungen beansprucht wird, so dass stets zumindest eine Energiereserve für die elektrische Maschine und gegebenenfalls für weitere Verbraucher zur Verfügung steht. Dadurch kann beim Kriechen ein Laden des Energiespeichers bei einem ungünstigen Generatorwirkungsgrad und zusätzlicher Kupplungsbelastung vermieden oder zumindest verzögert werden.

Demnach schlägt die Erfindung vor, das Kriechmoment bei laufendem Verbrennungsmotor vorrangig über die Reibkupplung zu erzeugen, wobei das Übertragungsmoment der Kupplung jeweils dem gewünschten Kriechmoment entspricht.

Außerdem sind Schutzmaßnahmen für das Schaltelement bzw. die Kupplung vorgesehen, in deren Abhängigkeit die elektrische Maschine zur Durchführung des Kriechbetriebes herangezogen wird. Dazu wird vorteilhaft die Temperatur der Kupplung fortlaufend überwacht. Droht eine Überhitzung der Kupplung im Kriechbetrieb, wird also ein Temperaturschwellwert überschritten oder wird ein Kriechmoment angefordert, dass einen vorgegebenen maximal zulässigen Übertragungsmomentschwellwert der Kupplung überschreitet, unterhalb dessen die Kupplung auch im Dauerschlupfbetrieb ausreichend gekühlt ist, werden die Schutzmaßnahmen eingeleitet.

Dazu kann vorgesehen sein, dass zur Entlastung des Schaltelements im Kriechbetrieb auf einen rein elektromotorischen Kriechbetrieb mittels der elektrischen Maschine umgeschaltet wird, wenn dies erforderlich ist. Dabei wird die elektrische Maschine bei offener Reibkupplung derart angesteuert, dass am Abtrieb das angeforderte Kriechmoment erzeugt wird. Die Reibkupplung kann dann lastfrei relativ schnell abkühlen.

Möglich ist es auch, dass die elektrische Maschine nur unterstützend zugeschaltet wird. Dabei wird das angeforderte Kriechmoment gemeinsam über die elektrische Maschine und die schlupfende Reibkupplung erzeugt, wodurch die Kupplung weniger beansprucht und der Energieverbrauch der elektrischen Maschine sowie die thermische Belastung der elektrischen Maschine im Vergleich zu einem rein elektrischen Kriechen geringer sind.

Dadurch, dass die Kupplungstemperatur überwacht und die elektrische Antriebsenergie möglichst nicht für rein elektromotorisches Kriechen verbraucht wird, ist die Verfügbarkeit einer Anfahrfähigkeit des Fahrzeuges vor allem auch bei einem Dauerkriechen an Steigungen sichergestellt.

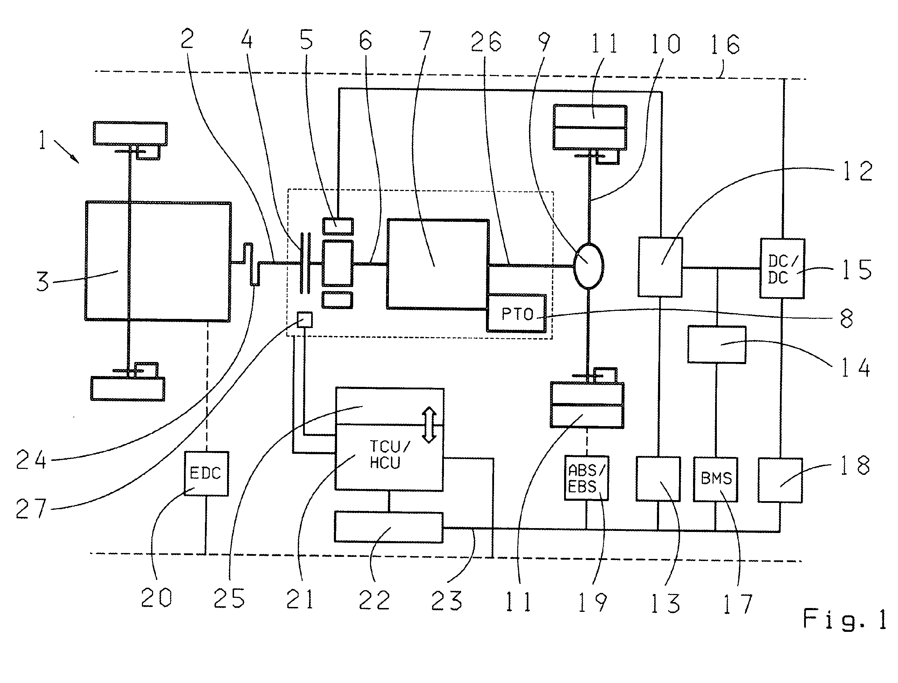

Zur Verdeutlichung der Erfindung ist der Beschreibung eine Zeichnung eines Ausführungsbeispiels beigefügt. In dieser zeigt Fig. 1 eine schematische Darstellung eines Hybridantriebes eines Fahrzeuges zur Durchführung eines erfindungsgemäßen Verfahrens zur Steuerung eines Kriechbetriebes.

Demnach ist in Fig. 1 ein Schema eines Fahrzeug-Hybridantriebes 1 mit einem Parallelhybrid - Antriebsstrang 2 dargestellt, wie er beispielsweise für ein Nutzfahrzeug (Lkw, Bus, Transporter, Sonderfahrzeug) vorgesehen sein kann. Der Antriebsstrang 2 weist einen Verbrennungsmotor 3, beispielsweise einen Dieselmotor mit einer Kurbelwelle 24 auf, die über ein vorteilhaft als Reibkupplung ausgebildetes Schaltelement 4 mit einer elektrischen Maschine 5 verbindbar ist. Die elektrische Maschine 5 ist über einen Getriebeeingang 6 mit einem Getriebe 7 gekoppelt.

Dem Getriebe 7 kann, wie in Fig. 1 angedeutet, ein nicht näher erläuterter Nebenabtrieb (PTO: Power Take-Off) 8 antriebstechnisch nachgeordnet sein. Über einen Abtrieb 26 und ein Differenzial 9 kann ein jeweils anliegendes Abtriebsmoment des Hybridantriebes 1 in herkömmlicher Weise an eine Antriebsachse 10 und über diese an die Antriebsräder 11 weitergeleitet werden.

Der Aufbau eines derartigen Antriebsstrangs 2 ist dem Fachmann an sich bekannt. Wesentlich für die Erfindung ist eine erfindungsgemäße Steuerung dieses Antriebstranges 2, insbesondere der elektrischen Maschine 5 und des Schaltelementes 4 zur Erzielung eines Kriechbetriebes.

Die Elektromaschine 5 kann je nach Betriebssituation als elektrisches Antriebsaggregat oder als Generator betrieben werden. Dazu ist sie mit einem Umrichter 12 verbunden, der von einem Umrichter-Steuergerät 13 ansteuerbar ist. Über den Umrichter 12 ist die Elektromaschine 5 mit einem elektrischen Antriebsenergiespeicher 14, beispielsweise einer 340V-Hochvolt-Batterie (auch Supercaps sind möglich), verbunden. Im motorischen Betrieb wird die Elektromaschine 5 vom Energiespeicher 14 gespeist. Im generatorischen Betrieb, also beim Antrieb mittels des Verbrennungsmotors 3 und/oder im Rekuperationsbetrieb, wird der Energiespeicher 14 durch die Elektromaschine 5 aufgeladen. Weiterhin fungiert die Elektromaschine 5 als integrierter Startergenerator zum Starten des Verbrennungsmotors 3.

Der Hochvoltkreis des Energiespeichers 14 beziehungsweise die daran angeschlossenen Steuergeräte sind über einen bidirektionalen Gleichspannungswandler (DC/DC) 15 an ein Bordnetz (24V oder 12V) 16 angeschlossen. Der Energiespeicher 14 ist über ein Batteriemanagementsystem (BMS) 17 bezüglich seines Ladezustandes (SOC: State of Charge) überwach- und regelbar. Der Gleichspannungswandler 15 ist über ein Gleichspannungswandler-Steuergerät 18 ansteuerbar. Zudem ist ein Steuergerät 19 für nicht näher erläuterte Bremsregelungsfunktionen, beispielsweise ein Antiblockiersystem (ABS) bzw. ein elektronisches Bremssystem (EBS) sowie ein weiteres Steuergerät 20 für eine elektronische Dieselregelung (EDC) des beispielhaft als Dieselmotor ausgebildeten Verbrennungsmotors 3 vorgesehen. Die einzelnen genannten Steuergeräte können auch, wenigstens zum Teil, in einem einzigen Steuergerät zusammengefasst sein.

Weiterhin ist eine integrierte Steuerungseinrichtung 21 angeordnet, in der ein Getriebesteuergerät (TCU: Transmission Control Unit), ein Hybridsteuergerät (HCU: Hybrid Control Unit) sowie verschiedene Betriebsfunktionen zusammengefasst sind. Der Steuerungseinrichtung 21 sind Steuerungsmittel, insbesondere eine Steuerungseinheit 25 zur Ansteuerung des Schaltelementes 4 im Schlupf zugeordnet, die auch in die Steuerungseinrichtung 21 integriert sein kann. Die Steuerungseinheit 25 ist derart ausgebildet, dass sie mit der Steuerungseinrichtung 21, die auch den Betrieb der elektrischen Maschine 5 regelt, bei der Regelung eines Kriechbetriebes zusammenwirkt, welches durch einen Doppelpfeil angedeutet ist.

Eine jeweilige Antriebsenergieverteilung und Funktionssteuerung der einzelnen Komponenten des Hybridantriebs ist über eine zentrale StrategieEinheit 22 vorgebbar, die, vorteilhaft über einen Datenbus (z.B. CAN) 23, mit der Steuerungseinrichtung 21 und der Steuereinheit 25 sowie den weiteren relevanten Steuergeräten 13, 17, 18, 19 verbunden ist.

Ein erfindungsgemäßes Verfahren, welches mit dem Hybridantrieb1 besonders effektiv durchführbar ist, beruht auf einem den Energiespeicher schonenden Kriechen des Fahrzeuges über das Schaltelement 4.

Dazu wird ein jeweils angefordertes Kriechmoment durch eine entsprechende Ansteuerung der Reibkupplung 4 im Schlupfbetrieb übertragen. Da von Beginn des Kriechbetriebes an die Reibkupplung 4 und nicht der elektrische Energiespeicher 14 für den Kriechbetrieb eingesetzt wird, entfällt ein Laden des Energiespeichers 14 mit schlechtem Generatorwirkungsgrad bei schlupfender Kupplung 4 und niedrigen Drehzahlen, so dass die Kupplung 4 nicht durch ein erhöhtes Generatordrehmoment belastet wird. Vielmehr wird die elektrische Maschine 5 erst bzw. nur dann für eine Fortführung des Kriechbetriebes eingesetzt, wenn dies über die Reibkupplung 4 nicht mehr möglich ist.

Diese Betriebssituation wird mittels einer Einrichtung zur Erfassung bzw. Ermittlung des Verlaufs der Kupplungstemperatur überwacht, die einen Temperatursensor 27 und/oder einen Drehmomentsensor aufweisen kann. Dieser Sensor 27 ist über eine Sensorleitung mit der Steuerungseinrichtung 21 und der Steuereinheit 25 verbunden. Bei Erreichen einer zulässigen Belastungsgrenze wird dann die elektrische Maschine 5 für den Kriechbetrieb als alleiniges Antriebsaggregat oder in Zusammenwirkung mit der Reibkupplung 4 durch eine entsprechende Ansteuerung des Umrichter-Steuergeräts 13 und einer diesbezüglichen Einstellung des Umrichters 12 elektromotorisch betrieben.

Insbesondere die Strategieeinheit 22 veranlasst dabei einerseits über das Umrichter-Steuergerät 13 und den Umrichter 12 je nach Erfordernis die Umschaltung der elektrischen Maschine 5 zwischen generatorischem und motorischem Betrieb. Andererseits veranlasst die Strategieeinheit 22 jeweils die Ansteuerung der elektrischen Maschine 5 und/oder der Reibkupplung 4 zur Erzeugung und Regelung eines gewünschten Kriechmomentes des Fahrzeuges im Zusammenwirken mit dem Übersetzungsgetriebe 7.

### Bezugszeichenliste

| | |
|---|---|
| 1 | Hybridantrieb |
| 2 | Antriebsstrang |
| 3 | Verbrennungsmotor |
| 4 | Schaltelement |
| 5 | Elektrische Maschine |
| 6 | Getriebeeingang |
| 7 | Getriebe |
| 8 | Nebenabtrieb |
| 9 | Differenzial |
| 10 | Antriebsachse |
| 11 | Fahrzeugrad |
| 12 | Umrichter |
| 13 | Umrichter-Steuergerät |
| 14 | Elektrischer Antriebsenergiespeicher |
| 15 | Gleichspannungswandler |
| 16 | Bordnetz |
| 17 | Batteriemanagementsystem |
| 18 | Spannungswandler-Steuergerät |
| 19 | Elektronische Bremsregelung |
| 20 | Elektronische Dieselregelung |
| 21 | Steuerungseinrichtung |
| 22 | Betriebsstrategie-Einheit |
| 23 | Datenbus |
| 24 | Kurbelwelle |
| 25 | Steuerungseinheit |
| 26 | Abtrieb |
| 27 | Temperatursensor; Drehmomentsensor |

## Patentansprüche

1. Verfahren zur Steuerung eines Kriechbetriebes eines Fahrzeuges mit einem Hybridantrieb (1) mit einem Antriebsstrang (2) im Wesentlichen umfassend einen Verbrennungsmotor (3), eine elektrische Maschine (5), ein zwischen dem Verbrennungsmotor (3) und der elektrischen Maschine (5) angeordnetes Schaltelement (4), ein Getriebe (7) und einen Abtrieb (26), wobei bei laufendem Verbrennungsmotor (3) zur Realisierung des Kriechbetriebes primär das Schaltelement (4) und sekundär, in Abhängigkeit einer Überwachung vorgegebener Betriebsparameter des Schaltelementes (4) und/oder von für den Kriechbetrieb relevanten Größen, die elektrische Maschine (5) eingesetzt wird, **dadurch gekennzeichnet, dass** das Schaltelement (4) entlastet wird, wenn ein angefordertes Kriechmoment einen Übertragungsmomentschwellwert des Schaltelementes (4) überschreitet.

2. Verfahren nach Anspruch 1, **dadurch gekennzeichnet, dass** zur Entlastung des Schaltelements (4) im Kriechbetrieb temporär die elektrische Maschine (5) unterstützend zugeschaltet wird.

3. Verfahren nach Anspruch 1, **dadurch gekennzeichnet, dass** zur Entlastung des Schaltelements (4) temporär auf einen elektrischen Kriechbetrieb über die elektrische Maschine (5) umgeschaltet wird.

4. Verfahren nach einem der Ansprüche 1 bis 3, **dadurch gekennzeichnet, dass** das Schaltelement (4) entlastet wird, wenn ein Temperaturschwellwert des Schaltelementes (4) überschritten wird.

5. Verfahren nach einem der Ansprüche 1 bis 4, **dadurch gekennzeichnet, dass** der Übertragungsmomentschwellwert des Schaltelementes (4) als ein vorab bestimmtes maximales Übertragungsmoment festgelegt ist, bis zu dem das Schaltelement (4) dauerhaft im Kriechbetrieb betreibbar ist.

6. Vorrichtung zur Durchführung des Verfahrens nach einem der vorhergehenden Ansprüche, wobei Steuerungs- und Überwachungsmittel (21, 22, 25, 27) vorgesehen sind, mittels denen bei Berücksichtigung einer zulässigen Belastung des Schaltelementes (4) ein Kriechmoment primär durch Betreiben des Schaltelementes (4) in einem Schlupfbetrieb und sekundär durch Betreiben der elektrischen Maschine (5) in einem Kriechmodus erzeugt wird, **dadurch gekennzeichnet, dass** mittels der Steuerungs- und Überwachungsmittel (21, 22, 25, 27) ein Übertragungsmoment des Schaltelementes (4) derart überwacht und geregelt wird, dass das Schaltelement (4) entlastet wird, wenn ein angefordertes Kriechmoment einen Übertragungsmomentschwellwert des Schaltelementes (4) überschreitet.

7. Vorrichtung nach Anspruch 6, **dadurch gekennzeichnet, dass** das Schaltelement (4) als eine Reibkupplung ausgebildet ist.

8. Vorrichtung nach Anspruch 6 oder 7, **dadurch gekennzeichnet, dass** mittels der Steuerungs- und Überwachungsmittel (27) die Temperatur des Schaltelementes (4) überwachbar ist.

## Claims

1. Method for controlling a creep operation of a vehicle with a hybrid drive (1) with a drivetrain (2) substantially comprising an internal combustion engine (3), an electric machine (5), a shift element (4) arranged between the internal combustion engine (3) and the electric machine (5), a transmission (7) and an output (26), wherein, when the internal combustion engine (3) is running, primarily the shift element (4) and secondarily, as a function of a monitoring of specified operating parameters of the shift element (4) and/or of variables relevant to creep operation, the electric machine (5) are used to produce the creep operation, **characterized in that** the shift element (4) is relieved of load when a demanded creep torque exceeds a transmission torque threshold of the shift element (4).

2. Method according to Claim 1, **characterized in that** the electric machine (5) is temporarily activated in an auxiliary manner in creep mode in order to relieve the shift element (4) of load.

3. Method according to Claim 1, **characterized in that** a switch is temporarily made to an electric creep operation via the electric machine (5) in order to relieve the shift element (4) of load.

4. Method according to one of Claims 1 to 3, **characterized in that** the shift element (4) is relieved of load when a temperature threshold of the shift element (4) is exceeded.

5. Method according to one of Claims 1 to 4, **characterized in that** the transmission torque threshold of the shift element (4) is specified as a previously determined maximum transmission torque until the shift element (4) can be permanently operated in creep mode.

6. Device for carrying out the method according to one of the preceding claims, wherein control and monitoring means (21, 22, 25, 27) are provided, by means of which, taking into account an admissible loading of the shift element (4), a creep torque is generated primarily by operating the shift element (4) in a slip operation and secondarily by operating the electric machine (5) in a creep mode, **characterized in that** a transmission torque of the shift element (4) is monitored and regulated by means of the control and monitoring means (21, 22, 25, 27) in such a manner that the shift element (4) is relieved of load when a demanded creep torque exceeds a transmission torque threshold of the shift element (4).

7. Device according to Claim 6, **characterized in that** the shift element (4) is formed as a friction clutch.

8. Device according to Claim 6 or 7, **characterized in that** the temperature of the shift element (4) can be monitored by means of the control and monitoring means (27).

## Revendications

1. Procédé pour commander un mode de roulage au pas d'un véhicule avec un entraînement hybride (1) avec une chaîne cinématique (2) comprenant essentiellement un moteur à combustion interne (3), une machine électrique (5), un élément de commutation (4) disposé entre le moteur à combustion interne (3) et la machine électrique (5), une transmission (7) et une prise de force (26), principalement l'élément de commutation (4) et deuxièmement la machine électrique (5), étant utilisés en fonction d'une surveillance de paramètres de fonctionnement prédéfinis de l'élément de commutation (4) et/ou de grandeurs pertinentes pour le mode de roulage au pas, lorsque le moteur à combustion interne (3) tourne, pour réaliser le mode de roulage au pas, **caractérisé en ce que** l'élément de commutation (4) est déchargé lorsqu'un couple de roulage au pas requis dépasse une valeur seuil de couple de transfert de l'élément de commutation (4).

2. Procédé selon la revendication 1, **caractérisé en ce que** pour décharger l'élément de commutation (4) en mode de roulage au pas, la machine électrique (5) est temporairement connectée pour fournir une assistance.

3. Procédé selon la revendication 1, **caractérisé en ce que** pour décharger l'élément de commutation (4), on passe temporairement à un mode de roulage au pas électrique par le biais de la machine électrique (5).

4. Procédé selon l'une quelconque des revendications 1 à 3, **caractérisé en ce que** l'élément de commutation (4) est déchargé lorsqu'une valeur de seuil de température de l'élément de commutation (4) est dépassée.

5. Procédé selon l'une quelconque des revendications 1 à 4, **caractérisé en ce que** la valeur de seuil de couple de transfert de l'élément de commutation (4) est fixée en tant que couple de transfert maximum déterminé préalablement, jusqu'auquel l'élément de commutation (4) peut fonctionner de manière durable en mode de roulage au pas.

6. Dispositif pour mettre en oeuvre le procédé selon l'une quelconque des revendications précédentes, dans lequel des moyens de commande et de surveillance (21, 22, 25, 27) sont prévus, au moyen desquels, en tenant compte d'une charge admissible de l'élément de commutation (4), un couple de roulage au pas est produit principalement par le fonctionnement de l'élément de commutation (4) en mode de glissement et deuxièmement par le fonctionnement de la machine électrique (5) en mode de roulage au pas, **caractérisé en ce qu'**un couple de transfert de l'élément de commutation (4) est surveillé et régulé au moyen des moyens de commande et de surveillance (21, 22, 25, 27) de telle sorte que l'élément de commutation (4) soit déchargé lorsqu'un couple de roulage au pas demandé dépasse une valeur de seuil de couple de transfert de l'élément de commutation (4).

7. Dispositif selon la revendication 6, **caractérisé en ce que** l'élément de commutation (4) est réalisé sous forme d'embrayage à friction.

8. Dispositif selon la revendication 6 ou 7, **caractérisé en ce que** la température de l'élément de commutation (4) peut être surveillée au moyen des moyens de commande et de surveillance (27).
